# EUROPÄISCHE PATENTSCHRIFT

(11) **EP 2 507 896 B1**
(45) Veröffentlichungstag und Bekanntmachung des Hinweises auf die Patenterteilung: **05.03.2014**
(21) Anmeldenummer: 10763598.9
(22) Anmeldetag: 11.09.2010
(51) Int. Cl.: H02K 1/14, H02K 15/02

(54) **Verfahren zur Herstellung eines Stators für einen Elektromotor**
Method for manufacturing a stator of an electric motor
Procédé de fabrication d'un stator de moteur électrique

(30) Priorität: 02.12.2009 DE 102009056647
(43) Veröffentlichungstag der Anmeldung: 10.10.2012
(73) Patentinhaber: Brose Fahrzeugteile GmbH & Co. KG, Würzburg, 97076 Würzburg (DE)
(72) Erfinder: KESSLER, Bernhard, 97705 Burkardroth (DE); FINGER, Christian, 97688 Bad Kissingen (DE)
(74) Vertreter: FDST Patentanwälte
(86) Internationale Anmeldenummer: PCT/EP2010/005584
(87) Internationale Veröffentlichungsnummer: WO 2011/066878

(56) Entgegenhaltungen:
- JP-A- 63 224 637
- US-A- 5 174 009
- US-A1- 2004 187 294

## Beschreibung

Die Erfindung betrifft ein Verfahren zur Herstellung eines Stators für einen Elektromotor gemäß dem Oberbegriff des Anspruchs 1. Ein derartiger Stator ist aus der JP 63 224637 A bekannt.

Ein Elektromotor ist ein Energiewandler, der elektrische Energie in mechanische Energie umwandelt. Ein derartiger Elektromotor umfasst einen Stator, der das fest stehende Motorteil bildet, und einen Rotor, der das sich bewegende Motorteil bildet. Bei einem Innenläufermotor ist der Stator üblicherweise mit einem Statorjoch versehen, an dem radial zur Mitte, nach innen ragende Statorzähne angeordnet sind, deren dem Rotor zugewandten Freienden den sogenannten Polschuh bilden. Auf die Statorzähne sind Wicklungen aufgebracht, die im elektromotorischen Betrieb ein Magnetfeld erzeugen. Zur Führung und Verstärkung des durch die bestromten Wicklungen erzeugten magnetischen Feldes ist das Statormaterial üblicherweise metallisch, beispielsweise aus weichmagnetischem Eisen.

Bei der Herstellung des Stators gestaltet sich die Wicklung um die Statorzähne relative schwierig, weil das Statorjoch einen Zugang zu den Statorzähnen von außen verhindert. Für eine Bewicklung von der Innenseite her erschweren die Polschuhe einen Zugang zu den Statorzähnen. Um ein aufwendiges Wicklungsverfahren zu vermeiden, ist daher ein mehrteiliger Aufbau des Stators üblich. Hierzu wird zunächst ein Blechpaket mit sternförmigen Statorzähnen hergestellt, die pohlschuhseitig über nachfolgend auch als Streustege bezeichnete Pohlschuhstege miteinander verbunden sind, um einen mechanisch stabilen Verbund zu erreichen. Der Stator wird dabei aus einzelnen, gestanzten Statorblechen gefertigt, indem diese zu dem sternförmigen Blechstapel in einem mechanisch stabilen Verbund paketiert werden.

Im Anschluss an die Bestückung der von außen zugänglichen Statorzähne mit den Wicklungen (Spulenwicklungen) wird das Blechpaket in das einen Rückschlußring bildende Statorjoch eingesetzt und mittels Pressung oder Schrumpfung gefügt. Nachteilig sind hierbei die zur mechanischen Stabilisierung erforderlichen Streustege, da diese einen unerwünschten magnetischen Kurzschluss verursachen.

Aus der DE 198 42 948 A1 ist ein Herstellungsverfahren eines Blechpakets eines Stators für einen Elektromotor bekannt. Das Blechpaket ist aus zumindest zwei unterschiedlichen Blechschnitten schicht- oder lagenweise paketiert. Beispielsweise soll nur jedes fünfte Blech innenseitig Streustege aufweisen, wobei die zwischen diesen Blechen liegenden Bleche des Blechpakets ohne Streustege ausgeführt sind und daher eine polschuhseitige Lücke bilden. Ein solches Blechpaket lässt sich von außen in einem Arbeitsgang bewickeln.

Mit einer derartigen Ausgestaltung des Stators kann zwar eine gewisse mechanische Stabilität des Stators bei gleichzeitig geringem magnetischem Kurzschluss über die Streustege zwischen den Polschuhen erreicht werden. Allerdings ist auch bei dieser Bauart nicht zu vermeiden, dass die Blechstärke der Statorbleche fertigungsbedingt auf Grund praktisch unvermeidbarer Toleranzen variiert. Somit werden zur Erlangung einer bestimmten Blechpakethöhe von Blechpaket zu Blechpaket verschieden viele Statorbleche benötigt. Weiterhin soll ein jedes Blechpaket zur Wahrung der mechanischen Stabilität mit mindestens einer Lage geschlossener Statorbleche mit Streustegen zwischen den Statorzähnen abschließen.

Bisher werden daher zunächst eine bestimmte Anzahl von Statorblechen in einer bestimmten Reihenfolge von geschlossenen Statorblechen mit Streustegen und offenen Statorblechen ohne Streustege gestapelt. Abschließend werden bis zum Erreichen der gewünschten Stapelhöhe nur noch geschlossene Statorbleche gestapelt. Dieses Verfahren gewährleistet zwar die notwendige mechanische Stabilität, verschlechtert allerdings die magnetischen Kurzschlusseigenschaften des Stators mit jedem geschlossenen Abschlussblech.

Der Erfindung liegt die Aufgabe zugrunde, ein besonders geeignetes Stapelverfahren zur Herstellung eines Stators anzugeben.

Diese Aufgabe wird erfindungsgemäß gelöst durch die Merkmale des Anspruchs 1. Eine vorteilhafte Ausgestaltung ist Gegenstand des Unteranspruchs.

Dazu weist der Stator in dessen Blechpaket ein in Stapelrichtung unteren Anfangsblock aus genau zwei geschlossenen Statorblechen auf. Ein prinzipiell denkbares Einzelblech des Anfangsblockes wäre zwar hinsichtlich der magnetischen Kurzschlusseigenschaften wünschenswert, würde jedoch erkanntermaßen nicht die erforderliche mechanische Stabilität innerhalb des gesamten Blechpaketes gewährleisten können.

An diesen Anfangsblock schließt sich innerhalb des Blechpaketes des Stators ein Wiederholungsblock an, der in mehreren gleichen Wiederholungssequenzen offene Statorbleche und geschlossene Statorbleche aufweist. Dabei umfasst jede Wiederholungssequenz - in Stapellängsrichtung - unmittelbar aufeinanderfolgende offene Statorblechen mit polschuhseitiger Lücke zwischen den Statorzähnen und mindestens ein geschlossenes Statorblech. Bei erkanntermaßen ausreichender mechanischer Stabilität ist für einen möglichst geringen magnetischen Kurzschluss in jeder Wiederholungssequenz des Wiederholungsblocks nur ein einziges geschlossenes Statorblech vorgesehen.

Zur Optimierung der mechanischen Stabilität einerseits und der magnetischen Kurzschlusseigenschaften innerhalb des Wiederholungsblockes - und damit innerhalb des gesamten Blechpakets - andererseits, sind in jeder Wiederholungssequenz des Wiederholungsblocks genau zwei unmittelbar aufeinander folgende offene Statorbleche vorgesehen.

Das Blechpaket des Stators weist zudem einen Abschlussblock aus mindestens einem geschlossenen Statorblech auf. Hinsichtlich einer ausreichenden mechanischen Stabilität schließt das Blechpaket vorzugsweise mit mindestens zwei und maximal drei geschlossenen Statorblechen ab.

Zum Erreichen der bestimmten oder geforderten Blechpakethöhe ist zwischen dem Wiederholungsblock und dem Abschlussblock ein Zwischenblock vorgesehen. Dieser weist in Abhängigkeit von der vorgegebenen Blechpakethöhe entweder kein Statorblech auf, wenn der Abschlussblock bereits aus zwei geschlossenen Statorblechen besteht. Alternativ, wenn der Abschlussblock aus nur einem geschlossenen Statorblechen besteht, weist der Zwischenblock nur genau ein geschlossenes Statorblech auf. Gemäß einer weiteren Alternative sind im Zwischenblock zwei geschlossene Statorbleche vorgesehen, die durch mindestens ein offenes Statorblech getrennt sind. Somit ergibt sich eine erste Variante des Stators, bei der kein Statorblech im Zwischenblock vorgesehen ist, wenn der Abschlussblock bereits zwei geschlossene Statorbleche aufweist. Gemäß einer zweiten Variante weist der Zwischenblock dann ein geschlossenes und/oder mindestens ein offenes Statorblech mit polschuhseitiger Lücke auf.

Der Zwischenblock ermöglicht somit einen besonders flexiblen Ausgleich der sich im Blechpaket aufsummierenden Toleranzen der Blechdicken der einzelnen Blechlagen aus offenem und/oder geschlossenem Statorblech. Hierdurch ist gewährleistet, dass die vorgegebene Blechpakethöhe vergleichsweise exakt erreicht und insbesondere nicht überschritten wird. Dies wiederum stellt sicher, dass die üblicherweise auf separaten Wickeldornen hergestellten Spulenwicklungen stets gleichen Innendurchmessers auf die Statorzähne des Blechpaketes mit möglichst geringem Übermaß und unter zuverlässiger Vermeidung eines Untermaßes aufsetzbar sind, das ein zerstörungsfreies Aufsetzen dieser Spulenwicklung auf die einzelnen Statorzähne praktisch ausschließen würde.

Zum Stapeln der offenen und geschlossenen Statorbleche zu dem sternförmigen Blechpaket vorbestimmter Blechpakethöhe wird somit zunächst ein in Stapelrichtung unterer Anfangsblock aus zwei geschlossenen Statorblechen gebildet. An diesen Anfangsblock schließt sich ein Wiederholungsblock aus offenen und geschlossenen Statorblechen in mehreren gleichen Wiederholungssequenzen an. Diese Wiederholungssequenzen werden dabei aus einer Lücke mit unmittelbar aufeinander folgenden offenen Statorblechen und mindestens einem geschlossenen Statorblech gebildet.

In Abhängigkeit von der mit dem Anfangsblock und dem Wiederholungsblock bereits erreichten Blechpakethöhe wird entweder direkt ein Abschlussblock auf den Wiederholungsblock aufgesetzt, wenn der Abschlussblock aus zwei Statorblechen gebildet ist. Ist dieser nur aus einem geschlossenen Statorblech gebildet, wird auf dem Wiederholungsblock zunächst ein Zwischenblock mit einem geschlossenen Statorblech und mit einer Lücke aus offenen Statorblechen gebildet, deren Anzahl letztendlich von der Anzahl der die Lücken im Wiederholungsblock bildenden offenen Statorblechen abhängig ist. Die Lücke besteht dabei aus mindestens einem offenen Statorblech und einer maximalen Anzahl offener Statorbleche, welche Anzahl um ein offenes Statorblech geringer ist als die Anzahl der offenen Statorbleche innerhalb der Lücken der Wiederholungssequenzen des Wiederholungsblockes.

Zur Fertigstellung des Stators wird das sternförmige Blechpaket in ein zylinderförmiges Statorjoch eingesetzt, das mit dem Blechpaket, insbesondere in einem Impulsfügeprozess, form- und/oder kraftschlüssig verpresst bzw. gefügt wird. Die Statorbleche werden während der Herstellung des sternförmigen Blechpaketes geeigneterweise blechlagenweise geprägt. Hierdurch wird in einfacher und zuverlässiger Art und Weise eine radiale und axiale Verschieblichkeit der einzelnen Statorbleche gegeneinander und damit eine Verformung und Verungleichmäßigung des Blechpaketverbundes vermieden.

Nachfolgend werden Ausführungsbeispiele der Erfindung anhand einer Zeichnung näher erläutert. Darin zeigen:
- Fig. 1: in perspektivischer Darstellung ein sternförmiges Blechpaket eines Stators mit übereinander gestapelten offenen und geschlossenen Statorblechen,
- Fig. 2: in perspektivischer Darstellung ein Ausschnitt aus dem sternförmigen Blechpaket gemäß Fig.1 mit den übereinander gestapelten offenen und geschlossenen Statorblechen,
- Fig. 3: in Draufsicht ein einzelnes geschlossenes Statorblech mit Polschuhstegen,
- Fig. 4: in Draufsicht ein einzelnes offenes Statorblech mit polschuhseitigen Lücken,
- Fig. 5: in einer ausschnittsweisen schematischen Schnittdarstellung das Blechpaket mit einem Anfangsblock, einem Wiederholungsblock, einem Abschlussblock und einem Zwischenblock mit einem offenen Statorblech zwischen dem Wiederholungsblock und dem Abschlussblock,
- Fig. 6: in einer ausschnittsweisen schematischen Schnittdarstellung das Blechpaket mit dem Anfangsblock, dem Wiederholungsblock, dem Abschlussblock und dem Zwischenblock mit zwei offenen Statorblechen zwischen dem Wiederholungsblock und dem Abschlussblock,
- Fig. 7: in einer ausschnittsweisen schematischen Schnittdarstellung das Blechpaket mit dem Anfangsblock, dem Wiederholungsblock, dem Abschlussblock und dem Zwischenblock keinem bzw. mit zwei offenen und einem geschlossenen Statorblech zwischen dem Wiederholungsblock und dem Abschlussblock, und
- Fig. 8: in perspektivischer Darstellung den Stator eines Elektromotors mit in ein ringförmiges Statorjoch eingesetztem Blechpaket.

Einander entsprechende Teile sind in allen Figuren mit den gleichen Bezugszeichen versehen.

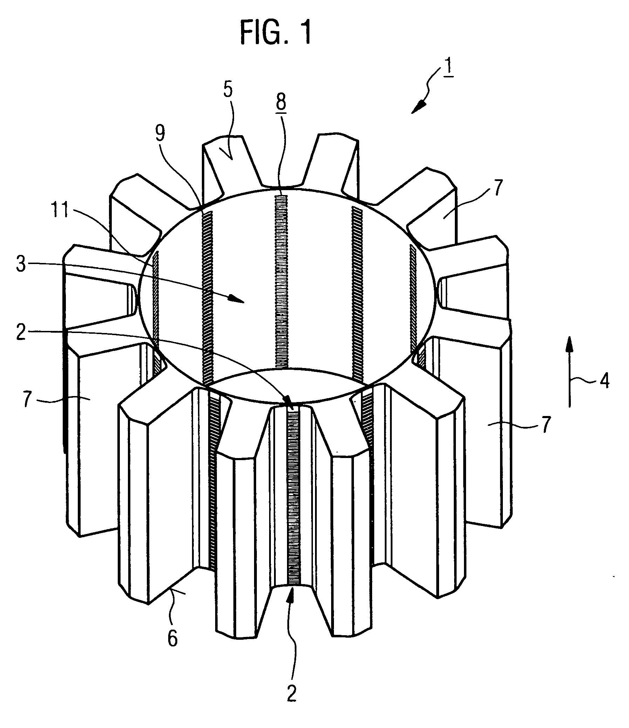

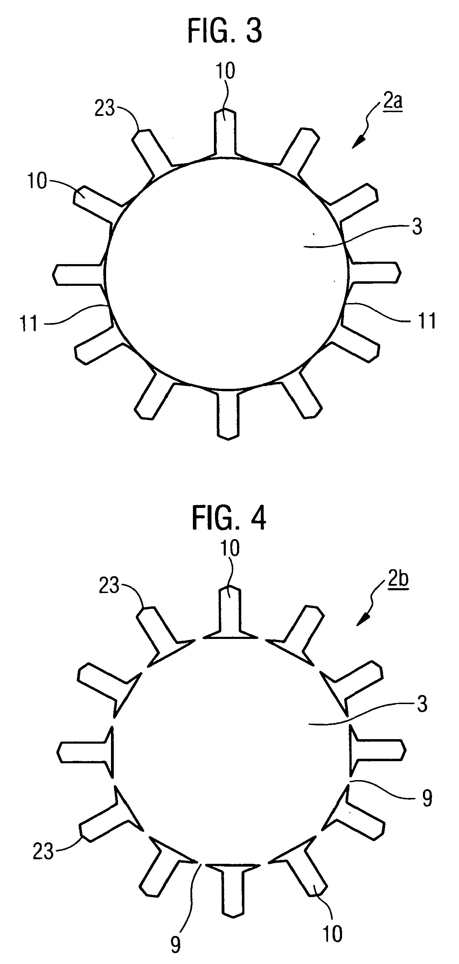

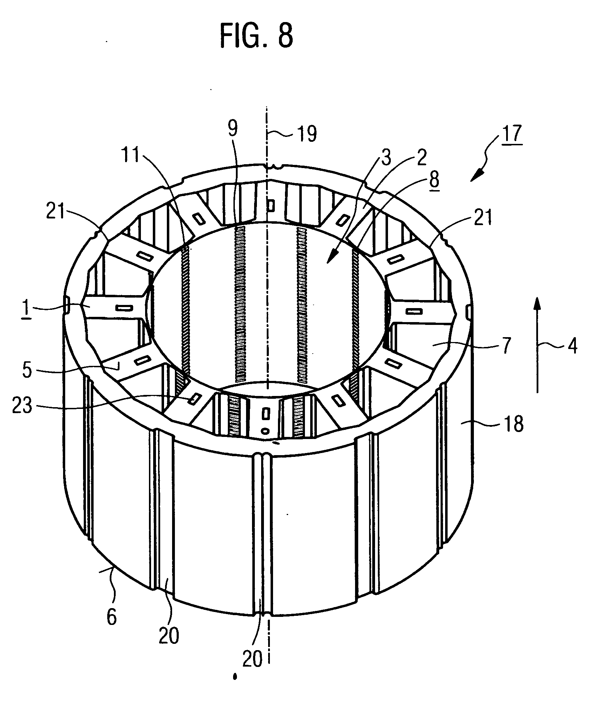

Fig. 1 zeigt ein sternförmiges Blechpaket 1 aus in Lagen übereinander gestapelten Statorblechen 2 im Montagezustand. Die Statorbleche 2 sind unter Bildung einer zentralen, zylindrischen Öffnung 3 in Stapelrichtung 4 aufeinander geschichtet und beispielsweise miteinander verprägt. Das Blechpaket 1 ist Teil eines Stators (Fig. 8) eines nicht näher dargestellten Elektromotors. Das Blechpaket 1 schließt an dessen Oberseite 5 und an dessen Unterseite 6 jeweils mit mindestens einem in Umfangrichtung geschlossenen Statorblech 2a ab, wie ein solches in Fig. 3 gezeigt ist.

Das Blechpaket 1 umfasst radial verlaufende Statorzähne 7, die an der radial zur Mitte gelegenen Innenseite einen zylinderförmigen Polschuh 8 bilden. Der Polschuh 8, der dem nicht dargestellten Rotor des Elektromotors zugewandt ist, ist in Stapelrichtung 4 unter Bildung von polschuhseitigen Lücken 9 nur teilweise umfangsseitig geschlossen, um einen magnetischen Kurzschluss zu verringern.

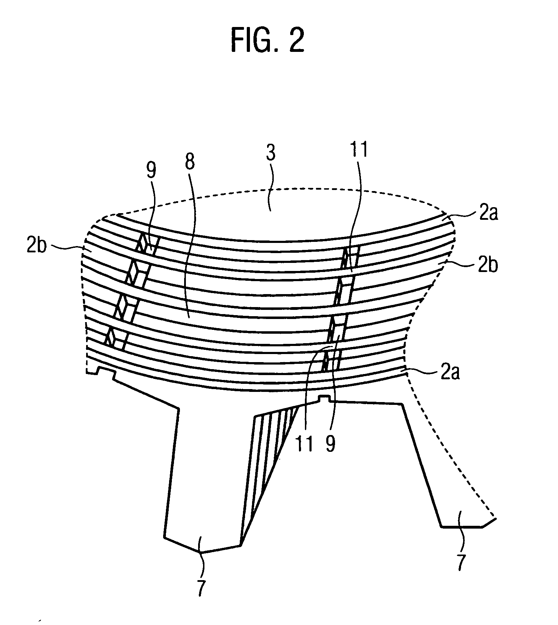

Fig. 2 zeigt einen Ausschnitt des in Fig. 1 dargestellten sternförmigen Blechpakets 1 mit Blick auf den innenseitigen Polschuh 8 des Blechstapels 1. Dabei ist vergleichsweise deutlich ersichtlich, dass die Lücken 9 durch offene Statorbleche 2b gebildet sind, wie ein solches in Fig. 4 gezeigt ist. Die offenen Statorbleche 2b bestehen praktisch nur aus Einzelzähnen oder Einzelzahnblechen 10.

Die polschuhseitigen Lücken 9 sind auf der Innenseite des Blechpaketes 1 in Stapelrichtung 4 durch Polschuhstege 11 begrenzt, um im paketierten Verbund des Blechpaketes 1 die in Stapelrichtung 4 benachbarten offenen Statorbleche 2b in ihrer Solllage zu fixieren und somit die erforderliche mechanische Stabilität des Blechpaket 1 zu gewährleisten. Die Polschuhstege 11 verbinden jeweils zwei benachbarte Einzelzähne 10 der in Umfangrichtung geschlossenen Statorblech 2a miteinander.

Die Einzelzähne 11 der geschlossenen Statorbleche 2a und der offenen Statorbleche 2b sind im Blechpaket 1 derart angeordnet, dass alle Einzelzähne 10 mit ihrer Außenkontur übereinanderliegend abschließen und somit die gleichförmigen sowie gleichmäßigen Statorzähne 7 zu bilden. Auf die radial nach außen weisenden Statorzähne 7 werden hier nicht dargestellte Spulenwicklungen aufgebracht. Die Spulenwicklungen werden üblicherweise auf einem separaten Wickeldorn gewickelt und sind somit hinsichtlich ihrer dem Außendurchmesser des Wickeldorns entsprechenden lichten Weite stets gleich. Diese Spulenwicklungen werden im elektromotorischen Betrieb bestromt und erzeugen ein Magnetfeld. Das Magnetfeld wird vom aus weichmagnetischem Eisen bestehenden Blechstapel 1 verstärkt und geführt.

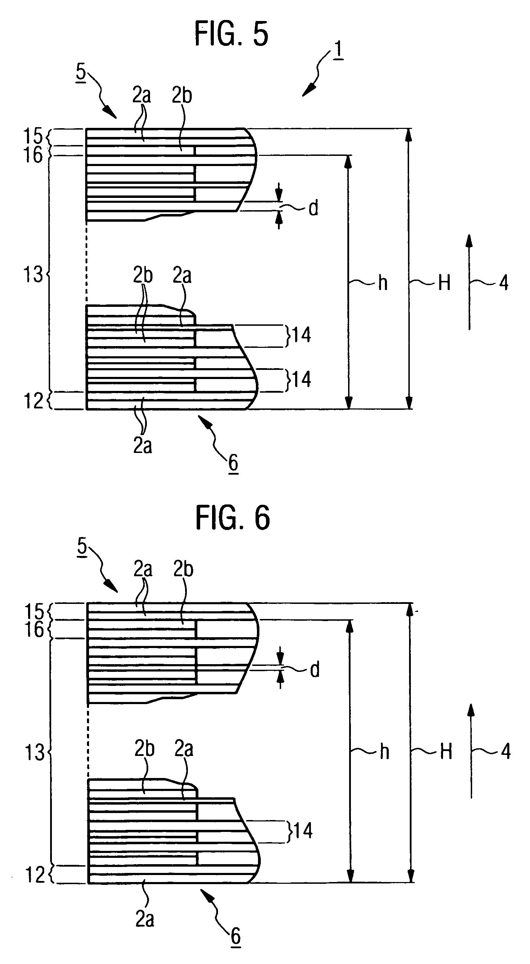

Fig. 5 zeigt in einer ausschnittsweisen Schnittdarstellung das Blechpaket 1, das an dessen Unterseite 6 mit zwei in Stapelrichtung 4 unmittelbar aufeinander liegenden geschlossenen Statorblechen 2a besetzt ist. Die beiden untersten geschlossenen Statorbleche 2a bilden einen Anfangsblock 12 des Blechpaketes 1. Der Anfangsblock 12 dient zur mechanischen Stabilisierung des Blechpaketes 1.

An den Anfangsblock 12 schließt sich in Stapelrichtung 4 ein Wiederholungsblock 13 mit n Wiederholungssequenzen 14 an. Jede Wiederholungssequenz 14 besteht aus in Stapelrichtung 4 zwei offenen Statorblechen 2b und einem einzelnen geschlossenen Statorblech 2a. Durch die alternierende Reihenfolge von zwei offenen Statorblechen 2b und einem geschlossenen Statorblech 2a wird ein Optimum der sich quasi widersprechenden Anforderungen einer möglichst hohen mechanische Stabilität und einem möglich geringen magnetischen Kurzschluss des Blechpakets 1 erzielt.

Das Blechpaket 1 schließt an dessen Oberseite 5 mit einem Abschlussblock 15 aus zwei geschlossenen Statorblechen 2a ab. Aufgrund von Fertigungstoleranzen weicht die Blechdicke oder -stärke d einzelner Statorbleche 2b,2a voneinander ab, wobei sich die Abweichungen bzw. die Toleranzen innerhalb des Blechpaketes 1 addieren. Dies hat zwangsläufig Abweichungen der Blechpakethöhe in Stapelrichtung 4 zur Folge.

Um bei der Herstellung des Blechpaketes 1 und insbesondere bei der Herstellung einer Vielzahl derartiger Blechpakete 1 dennoch stets eine bestimmte, vorgegebene Blech- oder Gesamtstapelhöhe H zu gewährleisten, d.h. insbesondere nicht zu überschreiten, ist zwischen dem Wiederholungsblock 13 und dem Abschlussblock 15 ein Zwischenblock 16 vorgesehen. Die Anzahl der Lagen von Statorblechen 2b, 2a dieses Zwischenblockes 16 richtet sich nach der Blechstapelhöhe h, die nach einer vorgegebenen Anzahl von Wiederholungssequenzen 14 erreicht ist. Diese Blechstapelhöhe h variiert von Blechpaket 1 zu Blechpaket 1 und ist abhängig von den Blechstärken d der gestapelten offenen Statorbleche 2b und geschlossenen Statorbleche 2a.

Zum Erreichen der vorgegebenen Gesamtblechstapelhöhe H wird abhängig von der Differenz zwischen der Gesamtblechstapelhöhe H und der mit dem Anfangsblock 12 sowie dem Wiederholungsblock 13 erreichten Blechstapelhöhe h ein Zwischenblock 16 mit mehr oder weniger offenen und/oder geschlossenen Statorblechen 2b bzw. 2a eingefügt.

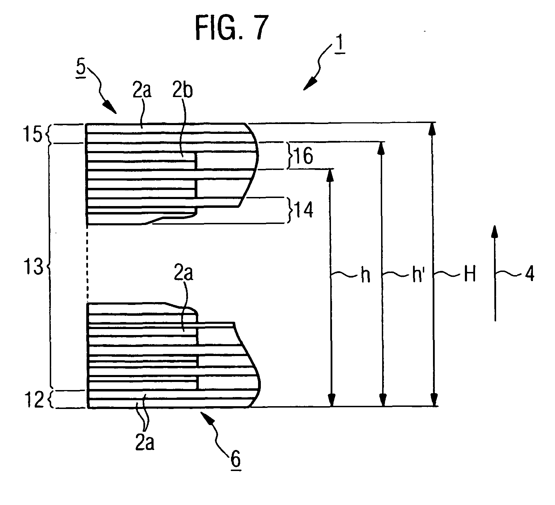

Gemäß Fig. 5 kann der Zwischenblock 16 aus einem offenen Statorblech 2b gebildet sein. Fig. 6 zeigt ein Blechpaket 1, dessen Zwischenblock 16 zwei offene Statorbleche 2b umfasst. Fig. 7 zeigt ein Blechpaket 1, dessen Zwischenblock 16 zwei offene Statorbleche 2b und ein geschlossenes Statorblech 2a umfasst. Dies entspricht im Ausführungsbeispiel der Wiederholungssequenz 14. Wenn keine bestimmte Anzahl n der Wiederholungssequenzen 14 bis zum Erreichen der Blechstapelhöhe h vorgegeben ist, könnte diese spezielle Ausführungsform auch mit einem Zwischenblock 16 betrachtet werden, der kein Statorblech 2 umfasst. Andernfalls, wenn also eine bestimmte Anzahl n der Wiederholungssequenzen 14 bis zum Erreichen der Blechstapelhöhe h vorgegeben ist, besteht der Zwischenblock 16 aus den zwei offenen Statorblechen 2b und dem einen geschlossenen Statorblech 2a. Der Zwischenblock 16 kann aus keinem, einem oder mehreren offenen Statorblechen 2b und/oder geschlossenen Statorblechen 2a gebildet sein. Der Zwischenblock 16 trägt somit der Optimierung von mechanischer Stabilität und Kurzschlusseigenschaften des Blechpakets 1 besonders einfache Rechnung. Fig. 8 zeigt einen Stator 17, der aus dem sternförmigen Blechpaket 1 und einem Statorjoch 18 gefügt ist. Das Statorjoch 18 ist geeigneterweise ein Zylindermantel aus Vollmaterial. Das Statorjoch kann jedoch auch aus aufeinander gestapelten Rückschlussringblechen gefertigt sein. Im Montagezustand sind die hier wiederum nicht sichtbaren Wicklungen um die Statorzähne 7 des Blechstapels 1 gelegt. Die Wicklungen werden vor dem Fügen des Blechpaketes 1 und des Statorjochs 18 auf die Statorzähne 7 aufgesetzt. Im elektromotorischen Betrieb erzeugen die bestromten Wicklungen das statorseitige Magnetfeld, das in Wechselwirkung mit Permanentmagneten des um die zentrale Stator- oder Motorachse 19 rotierenden Rotors des bürstenlosen Elektromotors tritt.

Entlang dem Außenumfang ist das Statorjoch 18 mit Präge- oder Fügenuten 20 versehen. Die Präge- bzw. Fügenuten 20 verlaufen entlang der Stapelrichtung 4 und dienen zum Verpressen des Statorjochs 18 mit dem Blechpaket 1 nach dem sogenannten Impulsfügeverfahren. Während des Press- bzw. Fügeverfahrens dringen die dem Polschuh 8 radial gegenüberliegenden keilförmigen Zahnspitzen 21 der Einzelzähne 7 in das Statormaterial formschlüssig ein. Auf der Oberseite 5 des Blechpaketes 1 sind Prägungen 22 in den Einzelzahnblechabschnitten des obersten geschlossenen Statorblechs 2a erkennbar.

### Bezugszeichenliste

- 1: Blechpaket
- 2: Statorblech
- 2a: geschlossenes Statorblech
- 2b: offenes Statorblech
- 3: Öffnung
- 4: Stapelrichtung
- 5: Oberseite
- 6: Unterseite
- 7: Statorzahn
- 8: Polschuh
- 9: Lücke
- 10: Einzelzahn/-blech
- 11: Polschuhsteg
- 12: Anfangsblock
- 13: Wiederholungsblock
- 14: Wiederholungssequenz
- 15: Abschlussblock
- 16: Zwischenblock
- 17: Stator
- 18: Statorjoch
- 19: Stator-/Motorachse
- 20: Präge-/Fügenut
- 21: Zahnspitze
- 22: Prägung

- d: Blechstärke/-dicke
- h: Blechstapelhöhe
- H: Gesamtblechstapelhöhe

## Patentansprüche

1. Verfahren zur Herstellung eines Stators (17) für einen Elektromotor, bei dem eine Anzahl von Statorblechen (2) zu einem sternförmigen Blechpaket (1) aus in Umfangsrichtung geschlossenen Statorblechen (2a) mit über Pohlschuhstege (11) miteinander verbundenen Einzelzähnen (10) und aus in Umfangsrichtung offenen Statorblechen (2b) mit unter Bildung einer polschuhseitigen Lücke (9) zueinander beabstandeten Einzelzähnen (10) gestapelt werden, wobei ein in Stapelrichtung (4) unterer Anfangsblock (12) aus zwei geschlossenen Statorblechen (2a) und ein Wiederholungsblock (13) mit N gleichen Wiederholungssequenzen (14) aus n unmittelbar aufeinanderfolgenden offenen Statorblechen (2b) und mindestens einem geschlossenen Statorblech (2a) gebildet wird,
**dadurch gekennzeichnet,**
- **dass** in Abhängigkeit von der erreichten Gesamtblechstapelhöhe (H) auf dem Wiederholungsblock (13) kein Zwischenblock (16) oder ein Zwischenblock (16) mit einem geschlossenen Statorblech (2a) und/oder m mit 1 ≤ m ≤ n-1 offenen Statorblechen (2b) gebildet wird, und
- **dass** auf dem Wiederholungsblock (13) bzw. auf dem Zwischenblock (16) ein Abschlussblock (15) aus mindestens einem geschlossenen Statorbleche (2a) gebildet wird.

2. Verfahren nach Anspruch 1,
**dadurch gekennzeichnet,**
**dass** das sternförmige Blechpaket (1) in ein zylinderförmiges Statorjoch (18) eingesetzt und dieses mit dem Blechpaket (1) in einem Fügevorgang, insbesondere in einem Impulsfügeprozess, verpresst wird.

## Claims

1. Method for the production of a stator (17) for an electric motor, wherein a number of stator sheets (2) are stacked in a star-shaped laminated sheet package (1) made from stator sheets (2a) that are closed in the circumferential direction, having individual teeth (10) connected to one another via pole shoe webs (11), and made from stator sheets (2b) that are open in the circumferential direction, having individual teeth (10) that are at a distance from one another under formation of a gap (9) on the pole shoe side, wherein a lower starting block (12) in the stack direction (4) is formed from two closed stator sheets (2a) and a repetition block (13) with N identical repetition sequences (14) is formed from n directly consecutive, open stator sheets (2b) and at least one closed stator sheet (2a),
**characterised in that**,
- depending on the total sheet stack height (H) achieved on the repetition block (13), no intermediate block (16), or an intermediate block (16) having a closed stator sheet (2a) and/or m open stator sheets (2b), where 1 ≤ m ≤ n-1, is formed, and
- a terminating block (15) made from at least one closed stator sheet (2a) is formed on the repetition block (13) or on the intermediate block (16).

2. Method according to claim 1,
**characterised in that**,
the star-shaped sheet package (1) is introduced into a cylindrical stator yoke (18) and this is pressed with the sheet package (1) in an assembly process, in particular in an impulse assembly process.

## Revendications

1. Procédé de fabrication d'un stator (17) pour un moteur électrique,
d'après lequel un certain nombre de tôles de stator (2) sont empilées en un paquet de tôles (1) en forme d'étoile, composé de tôles de stator (2a) fermées dans la direction périphérique et présentant des dents individuelles (10) mutuellement reliées par l'intermédiaire de nervures de corne polaire (11), et de tôles de stator (2b) ouvertes dans la direction périphérique et présentant des dents individuelles (10) mutuellement espacées les unes des autres en formant entre elles un interstice de corne polaire (9), et d'après lequel on forme un bloc de départ (12) inférieur en se référant à la direction d'empilement (4) et constitué de deux tôles de stator fermées (2a), et un bloc répétitif (13) constitué de N séquences répétitives (14) identiques, composées de n tôles de stator ouvertes (2b) se succédant directement et d'au moins une tôle de stator fermée (2a),
**caractérisé**
- **en ce qu'**en fonction de la hauteur totale d'empilement de tôles (H) atteinte, on ne forme pas de bloc intermédiaire (16) sur le boc répétitif (13), ou bien on y forme un bloc intermédiaire (16) comprenant une tôle de stator fermée (2a) et/ou m tôles de stator ouvertes (2b), avec 1 ≤ m ≤ n-1, et
- **en ce que** sur le bloc répétitif (13), respectivement sur le bloc intermédiaire (16), on forme un bloc terminal (15) constitué d'au moins une tôle de stator fermée (2a).

2. Procédé selon la revendication 1, **caractérisé en ce que** l'on insère le paquet de tôles (1) en forme d'étoile dans une culasse de stator (18) de forme cylindrique, et l'on relie cette dernière, par compression, avec le paquet de tôles (1), lors d'une opération de liaison, notamment un processus de liaison par impulsions.
